# EUROPEAN PATENT SPECIFICATION

(11) **EP 2 932 773 B1**
(45) Date of publication and mention of the grant of the patent: **19.04.2023**
(21) Application number: 13861962.2
(22) Date of filing: 27.06.2013
(51) Int. Cl.: H04W 4/021, H04W 4/029

(54) **GEO-FENCING BASED UPON SEMANTIC LOCATION**
AUF SEMANTISCHER POSITION BASIERENDES GEOFENCING
ÉTABLISSEMENT DE GÉO-BARRIÈRES SUR LA BASE DE POSITIONS SÉMANTIQUES

(30) Priority: 14.12.2012 US 201213715289
(43) Date of publication of application: 21.10.2015
(60) Divisional application: 16188798.9
(73) Proprietor: Intel Corporation, Santa Clara, CA 95054 (US)
(72) Inventor: SYDIR, Jaroslaw, San Jose, California 95120 (US); SKEBA, Kirk, Fremont, California 94536 (US); LAMARCA, Anthony, Seattle, Washington 98105 (US); AGERSTAM, Mats, Portland, Oregon 97229 (US)
(74) Representative: HGF
(86) International application number: PCT/US2013/048202
(87) International publication number: WO 2014/092796

(56) References cited:
- EP-A1- 2 469 781
- WO-A1-2008/134414
- WO-A1-2012/163671
- WO-A2-2010/144651
- WO-A2-2012/064651
- US-A1- 2008 319 665
- US-A1- 2010 148 947
- US-A1- 2012 309 413
- US-B1- 8 229 471

## Description

### BACKGROUND

The use of mobile devices, such as smartphones, is nearly ubiquitous. Many of these mobile devices include the capability to determine their gee-physical (e.g., geographic) location. That is, the mobile device is capable of determining its location in the real world. Conventionally, location determination is typically accomplished by using Global Positioning Systems (GPS), some form of telemetry based upon multiple radio signals (e.g., cellular), internet protocol (JP) geo-location, or some combination thereof.

A collection of so-called location-based services (LBSs) arc emerging that take advantage of the location-awareness capability of the mobile devices that so many people are carrying with them each day. For example, LBSs include targeted advertising, social networking, locating friends ("check-ins"), photo-tagging, life-logging, location-based games, fitness monitoring, etc. LBS may include vehicle or parcel tracking as well.

One application of LBS is gee-fencing. A geo-fence is a virtual perimeter around a real-world geographic or physical area. When a gee-fence-enabled device crosses the boundary of a geo-fenced area (by either entering or leaving the fenced area), the device typically produces all alert or triggers an action of some kind. Geo-fencing may be used, for example, to notify caregivers with a small child or an adult with a compromised mental capacity has wandered outside of a designated safe area. Geo-fencing may, for example, be used to trigger the sending of a command to your home control system to turn down the thermostat and arm the alarm system when you have left your home.

With most conventional geo-fencing and LBS approaches, the mobile device can locate an absolute position (e.g., geo-coordinate) to which it can compare to the known absolute geo-positions of nearby geo-fence lines. When using this approach, the boundaries of geo-fences are defined using gee-coordinates.

International Application Publication No. WO 2012/064651 A2 is directed towards self aware profile switching on a mobile computing device.

U.S. Application Publication No. 2012/0309413 A1 is directed towards monitoring a geofence using a wireless access point.

European Application Publication No. EP 2 469 781 A1 is directed to facilitating ad-hoc congregation using an application on a wireless mobile device. Geographical locations defined as meet-ups are shared with members of a group. When a wireless device of one of the members of the group is determined via GPS-based location identification to enter the geographic location of the meet-up, the wireless mobile device sends a meet-up notification message.

International Application Publication No. WO 2010/144651 A2 is directed to a context-aware mobile device to automatically determine appropriate user interface settings to implement at different times and/or locations. A behavior of the mobile device is tracked by determining locations visited and UI settings which are manually configured by a user. Patterns in the movement and the UI settings relative to one another and to time are detected. When a particular location or time is subsequently reached which corresponds to the pattern, an appropriate UI setting is to be implemented, thereby relieving the user of the task.

### SUMMARY

The extent of protection conferred is determined by the claims.

### BRIEF DESCRIPTION OF THE DRAWINGS

Fig. 1 shows an example scenario to illustrate implementations in accordance with the technologies described herein.
Fig. 2 illustrates an example system in accordance with the technologies described herein.
Fig. 3 is a flow chart illustrating an example method in accordance with the technologies described herein.
Fig. 4 illustrates an example computing device to implement in accordance with the technologies described herein.
Fig. 5 illustrates an example device to implement in accordance with the technologies described herein.

The Detailed Description references the accompanying figures. In the figures, the left-most digit(s) of a reference number identifies the figure in which the reference number first appears. The same numbers are used throughout the drawings to reference like features and components.

### DETAILED DESCRIPTION

Disclosed herein are technologies for geo-fencing based upon determinations of semantic locations. Conventionally, geo-fencing relies upon estimates of absolute and geo-physical coordinates to effectively determine if a mobile device has crossed a boundary of a geo-fenced area. In contrast, the technologies described herein provide a different foundational basis for location estimation for geo-fencing. Instead of estimating absolute and geo-physical coordinates (e.g., latitudes and longitudes), the technologies described herein determine a semantic or logical location of a mobile device.

As used herein, a semantic or logical location is a location given a label (e.g., "Home") and is characterized by one or more identifying observable or ascertainable innate attributes other than the location's absolute or geo-physical coordinates. One way that this can be accomplished is using wireless-signal beacons and ambient identifiable wireless signal ("IWS") sources. An example of an IWS source is a wireless access point (WAP), which allows access to a wired network using Wi-Fi, Bluetooth, or other such wireless communication standards.

Conventional approaches to geo-fencing rely on continuous signal-positioning approaches (such as GPS or terrestrial signal-based telemetry) to determine locations. These conventional approaches encourage the mobile device to have an always-on location-determination capability. Unfortunately, these approaches quickly drain the limited power resources (e.g., battery life) of the mobile device. However, with one or more implementations described herein, a mobile device can effectively estimate its location for the purposes of geo-fencing while minimizing power consumption.

Another issue with traditional geo-fencing is that the location estimation and/or the fence matching are performed on a server, requiring the user's device to send data over the network. Because of the need for continuous communication with this approach to geo-fencing, a third party (e.g., cellular phone service) often knows the user's location in the world. This, of course, has privacy concerns because the user is giving up some of their privacy by communicating their location to a third party. However, with one or more implementations described herein, a mobile device can effectively estimate its location for the purposes of geo-fencing and match the fences without notifying any third part of its location.

In addition, for anything but the simplest of boundaries of a geo-fenced area ("geo-fence boundaries") a significant amount of time and effort is required to author the fence boundaries. Laying out a set of boundaries requires knowledge of the geo-coordinates of every location where someone could cross the boundary.

Furthermore, the conventional GPS-based geo-fencing approach is typically unavailable indoors. Not all GPS signals penetrate to larger indoor locations. While some conventional indoor approaches exist, they are not universally available. When available, they are notoriously inconsistent and unreliable.

### LOCATION AWARENESS

Location awareness involves the mobile device determining its present location. Conventional location-determination approaches include GPS and Wi-Fi and cellular signal positioning (e.g., triangulation, trilateration, and other forms of interpolation and extrapolation) to determine geo-physical location relative to multiple signal sources. GPS provides near-ubiquitous location coverage outdoors and a GPS enabled typical smartphone can estimate its location with three to five meter accuracy. For signal positioning, the signal sources can use cellular or a variant of IEEE 802.11 (i.e., Wi-Fi). Signal-positioning approaches rely upon a map of signal sources whose locations are known to infer a location of a device.

Rather than relying on trilateration-based location approaches (like GPS) to determine geo-location with a fine-grain and absolute resolution, the technology described herein is based upon a location determination with a coarse grain and relative resolution. More particularly, the technology described herein utilizes determinations of logical or semantic locations.

One or more implementations include, for example, a mobile device recognizing and learning a frequented discrete location based on the "observed" ambient radio environment at that location. In particular, the mobile device can recognize and learn which ambient identifiable wireless ("IWS") sources are part of a topography within reception range at that discrete location.

A wireless access point (WAP) is a specific example of an ambient IWS source. The IWS sources are called ambient herein because they may be detected or "observed" in the environment while a mobile device moves about the world. The IWS sources are called "identifiable" because each is uniquely identifiable. For example, each WAP may be uniquely identified by its basic service set identification (BSSID) or media access card (MAC) address. Of course, other identifying characteristics may be used alone or in combination with each other or with the BSSID or MAC address. Examples of such other identifying characteristics include service set identification (SSID) and received signal strength indication (RSSI).

Because Wi-Fi signals propagate in all directions and because the propagation distance is typically limited to around thirty meters, the list of IWS sources associated with a place creates a border around the place. When a mobile device encounters one of the IWS sources associated with a particular place, the device knows that it has crossed a virtual boundary around that particular place. When a mobile device encounters an ambient IWS source, the device detects it based upon the signal beacon that the ambient IWS source is emitting and identifies the unique identification of the detected ambient IWS source.

Similarly, the mobile device may identify routes as a series of IWS sources. Places and routes are captured in a model, which allows the device to predict future arrivals at places by tracking the user along known routes within the model.

A place defined by a set of IWS sources may be given a label like "Home" or "Work." A discrete location, like that discussed herein, may be called a logical or semantic place or location. For example, a person's home may be a logical location defined by one or more ambient IWS sources at and/or around his home. Furthermore, a collection of nearby IWS sources may be combined to enlarge or extend the boundary of semantic location. For example, dozens of IWS sources scattered about a work campus may be semantic location collectively labeled "Work."

### EXAMPLE SCENARIO

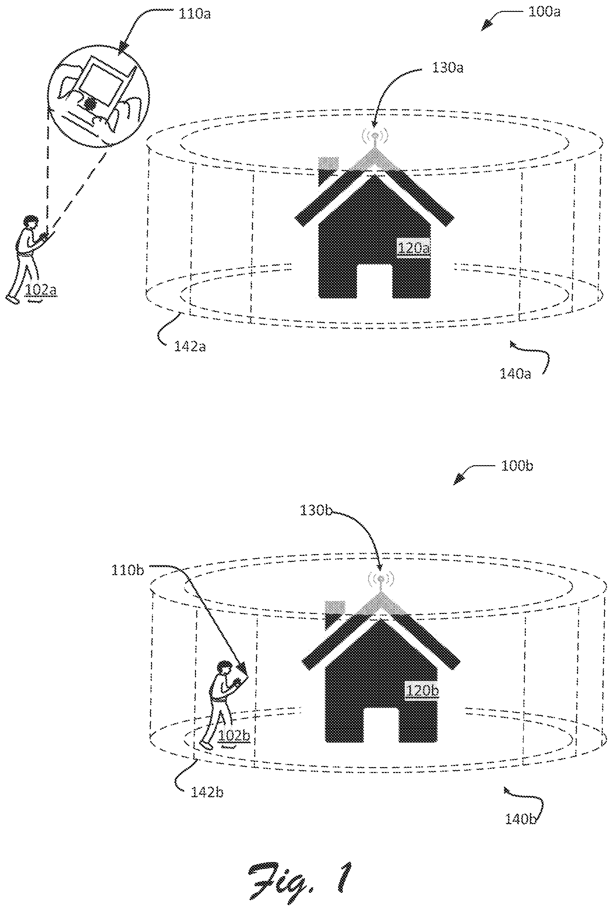

Fig. 1 shows two snapshots of an example scenario in which one or more implementations of the technology described here may be employed. Snapshot 100a shows a user 102a carrying a smartphone 110a that includes an implementation of the technology described herein. He is walking towards his home 120a. His home 120a is equipped with an IWS source 130a, which may be, for example, a WAP. The IWS source 130a is indicated in snapshot 100a by a roof-mounted antenna on the home 120a. This depiction is for illustration purposes and, typically, the IWS source 130a would not have an externally mounted antenna.

The IWS source 130a emits a wireless signal typically in an omni-directional manner. A dashed-line cylinder represents the reception range 140a of the wireless signal from the IWS source 130a. Only the ground-level reception area is of interest for this discussion; so, the reception range 140a is represented as a cylinder in Fig. 1 for illustration purposes only. The boundary or "geo-fence line" is represented by outer dashed line 142a.

In this example scenario, the user's home 120a is a semantic location called "Home." That semantic location is defined by the one IWS source 130a. In other implementations, more than one IWS source may define a semantic location. For this example, the "Home" is geo-fenced. Consequently, the reception range 140a is the effective geo-fenced area of the semantic location "Home." Thus, the geo-fence line 142a is the boundary of that geo-fenced area the semantic location "Home." That is, a larger place might be defined by a combination of multiple IWS sources and that the geo-fence line would be the exterior outline of the shape created by the union of the IWS sources' coverage areas.

As can be seen in snapshot 100a, the user 102a and his smartphone 110a are outside the reception range 140a. Consequently, the smartphone 110a is not receiving a signal from the WAP 130a at the home 120a. No apparent geo-fence line has yet been crossed.

Snapshot 100b shows the same components and participants as the previous snapshot: user 102b, smartphone 110b, home 120b, IWS source 130b, reception range 140b, and geo-fence line 142b. In the snapshot 100b, the user 102b with his smartphone 110b has crossed over the geo-fence line 142b and entered into the reception range 140b of the IWS source 130b of the home 120b.

From within the reception range 140b, the smartphone 110b can receive a signal from the IWS source 130b and identify it. The smartphone 110b can find the identified IWS source 130b in a database of associations between IWS sources and semantic locations. Upon finding the semantic location "Home," the phone can also discover in another or same database that "Home" is a geo-fenced area. In response, the smartphone 110b triggers a geo-fence notification that indicates crossing over into (or out of) the "Home" geo-fenced area.

The consequences of the geo-fence notification may include, for example, invoking execution/activation of a mobile application ("app") on the smartphone 110b; sending a particular text message to one or more recipients; emitting an audible alarm on the smartphone 110b; calling a designated phone number; logging the activity on the smartphone or on a cloud-based journal; capturing a photograph; starting or ending a video or audio capture; and many others.

While the geo-fence lines 142a and 142b are shown as well-defined lines in Fig. 1, such lines, in reality, will vary and be vague. Ultimately, the smartphone (e.g., 110b) notes that it has "crossed" the geo-fence line (e.g., 142b) once it has noted a clear change in reception of one or more ambient IWS sources (such as IWS source 130b) that are associated with a geo-fenced semantic location. For example, the smartphone notes that it has "crossed" the geo-fence line when the smartphone goes from not receiving a signal from an IWS source that is identified and associated with a geo-fenced semantic location to receiving such a signal. Similarly, for example, the smartphone notes that it has "crossed" the geo-fence line when the smartphone goes from receiving a signal from an IWS source that is identified and associated with a geo-fenced semantic location to not receiving such a signal. Once the smartphone notes that it has "crossed" the geo-fence line, the smartphone generates a geo-fence trigger or notification.

In some implementations, there may be verification process before a geo-fence crossing is fully confirmed. For example, the verification process may require several consecutive of signal reception (or lack thereof) and IWS source identification. Perhaps, a verification process may, for example, a set number of confirmations in a given time frame, such as two seconds, of signal reception (or lack thereof) and particular IWS source identification.

### ROUTES, MOBILE LOCATIONS, AND SETTING GEO-FENCED PLACES

In addition to locations themselves, the technology described herein can track frequently traveled routes. In addition, the semantic locations need not remain in the same set of geo-coordinates and, indeed, may be mobile themselves. With the technology described herein, a user can set geo-fences along routes and to movable and/or mobile semantic locations.

A mobile device (such as device 110a/110b) tracks ambient IWS sources when the device is active. Of course, when the user is stationary, the ambient IWS sources do not change or at least varies little. However, when the user travels (with the mobile device) new IWS sources are noted along the travel path. For example, the user may be walking, running, in a motor vehicle, train, or some via some other sort of ground transport.

For example, presume that Dorothy spends eight hours at work. During the workday, her mobile device records one or more IWS sources that have been given a semantic label of "Work." After her workday, she drives to a shopping center in her automobile. Dorothy labels the IWS sources at the shopping center "Store." While traveling from Work to the Store, her mobile device may encounter several ambient IWS sources (called, for example, U, T, R, and P). After she takes this path many times, the pattern of Work, U, T, R, and P and Store will reoccur frequently. At that point, that pattern may be recognized route and identified.

Note that the IWS sources along a route are themselves semantic locations, although they are not necessarily assigned names. These locations represent progress along a route from one place to another. The semantic locations along routes enable a user to set geo-fences at any distance/time from semantic locations that represent places based upon predictive abilities of the place/route tracking. For example, a user can set a geo-fence ten minutes before arriving at home in order to send a text message saying, "I am 10 minutes out." In essence, this geo-fence is set at the semantic location along the route which is determined to be 10 minutes from the end of the route. The place and route tracking process detects that the user has left work and tracks the user's progress along the routes that emanate from work. At some point, the process detects IWS sources along the route from work to home that have in the past been seen ten minutes before arriving at home and the geo-fence is triggered.

A user can quickly and easily set geo-fenced places based upon semantic locations. A geo-fence place may be set for many reasons. For example, a parent may want to know if their child has left their house ("Home") or arrived at a friend's house ("Emmanuel's House"). The parent can establish these semantic locations (of "Home" and "Emmanuel's House") as geo-fenced places. In this scenario, the parent will receive a text message when the child leaves their Home and when he arrives at Emmanuel's House.

Semantic locations are typically learned by a mobile device, as the user follows his daily routines visiting places and traversing routes between them. However, the definitions of semantic locations can be shared by users allowing a user to set a geo-fence for a location which they have not previously visited. A user, named Jerry, can share the definition of the semantic location, which represent the coffee shop in which he is waiting for a friend, Anthony, to arrive. The information about the semantic location that is "Coffee Shop" is sent to Anthony's mobile device. Anthony's device sets upon a geo-fence place based upon the semantic location of "Coffee Shop" with a triggering action to send a text to Jerry upon entering the geo-fenced place. When Anthony arrives at the parking lot of the coffee shop, Jerry receives an auto-generated text announcing Anthony's arrival.

As can be seen from the previous example, a user can choose to share their semantic location, route, and geo-fenced place definitions with others. An information exchange of place and route definitions can be done privately. That is, a private exchange can utilize an encryption and authentication protocols that would be expected for securely transmitting information. Such a private exchange does not require anyone beyond the two users to be aware of the created place/fence definitions. Therefore, with some implementations, there is no need enrolled in a cloud-based or third-party service.

### EXAMPLE SYSTEM

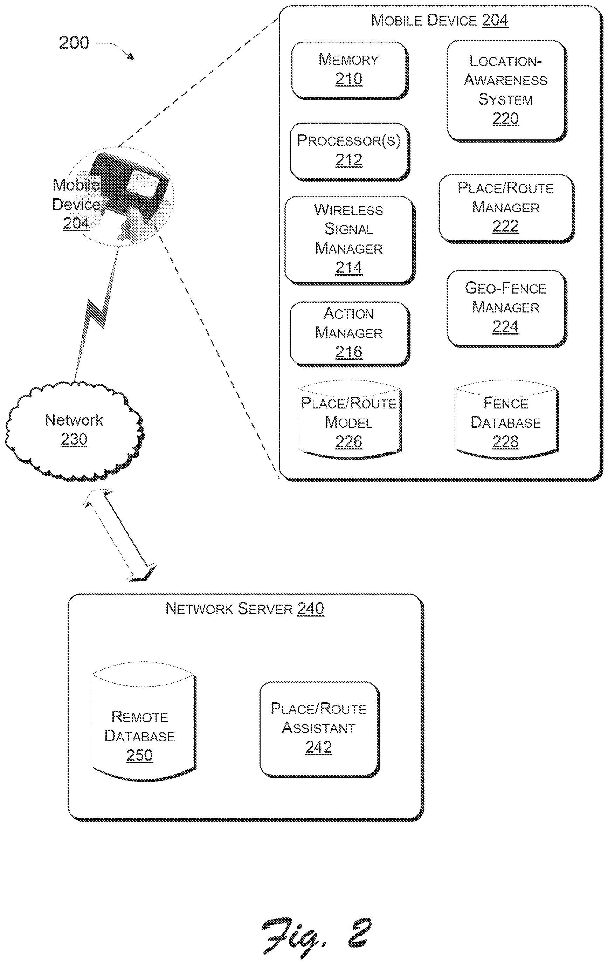

Fig. 2 illustrates example system 200 for implementing the technology described herein. The system 200 includes a mobile device 204, a network 230, and a network or cloud-based server 240. The mobile device 204 may be the same as or similar to mobile device (102a and 102b) that was already introduced.

The mobile device 204 includes a memory 210, one or more processor(s) 212, a wireless-signal manager 214, an action manager 216, a location-awareness system 220, a place/route manager 222, a geo-fence manager 224, a place/route model 226, and local database 228. These functional components can be separate or some combination of hardware units. Alternatively, the components can be implemented, at least in part, in software and thus be stored in the memory 210 and executed by the processors 212.

The wireless-signal manager 214 handles all wireless signals sent to or received by the device 204. For example, wireless signal manager 214 handles the communications via the network 230. The wireless-signal manager 214 especially handles signal management that aid in location awareness. For example, the wireless signal manager 214 may include the GPS components, cellular transceivers, and Wi-Fi transceivers.

In one or more implementations, the wireless-signal manager 214 periodically scans for ambient IWS sources. Semantic locations are based upon results of such scans. Those semantic locations are used by the place/route manager 222 to learn the user' locations and routes, which are stored in the place/route model 226. Using the geo-fence manager 224, the user sets geo-fences around semantic locations and stores such information in the fence database 228.

Information from the wireless scans of wireless-signal manager 214 are also used to drive the location-tracking process of the location-awareness system 220, which keeps track of the location of the user relative to the place/route model 226. Using this information, a user can geo-fence a location or set of locations using the geo-fence manager. That is, the user sets geo-fences around known locations.

Using information from the wireless-signal manager 214, the location-awareness system 220 tracks the location of the mobile device 204. This may accomplished, at least in part, by identifying the encountered ambient IWS sources. The place/route manager 222 determines the semantic location by, for example, the identified encountered ambient IWS sources. If the location or route is new, the place/route manager 222 learns it and incorporates the new information into the place/route model 226.

The geo-fence manager 224 handles both the defining of a geo-fenced area and triggering of a geo-fence notification upon the crossing of a geo-fence line of such an area. A user may, for example, designate a semantic location (or portion thereof or a collection thereof) as being geo-fenced. The geo-fence manager 224 stores such geo-fence information in the fence database 228. When a geo-fence line is crossed, the geo-fence manager 224 issues a geo-fence notification.

The action manager 216 responds to such a notification by performing or triggering of the performance of a predetermined action based, at least in part, upon the particular geo-fence area that the user is leaving or entering. For example, an automated text may be sent to another person when the wireless device 404 arrives at a geo-fenced "Work" area. Alternatively, the action manager 216 may launch a particular application on the mobile device.

The network 230 can be a wired and/or wireless network. It can include the Internet infrastructure and it may be presented as the cloud. The network 230 includes wired or wireless local area networks, a cellular network, and/or the like. The network 230 links the mobile device 204 with the network server 240. While many implementations of the technology described here operate without the network, some may use the assistance of the network.

The network or cloud-based server 240 provides assistance to the mobile device 204 as part of one or more implementations of the technology described herein. In some implementations, the network 230 and network server 240 are not used. The network server 240 can be one or more actual servers.

The network server 240 includes a place/route assistant 242 and a remote database 250. The place/route assistant 242 helps or takes on the function of the place/route manager 222. The remote database 250 stores associations between IWS sources, semantic locations, and/or geo-fenced locations.

The remote database 250 stores associations between IWS sources, semantic locations, and/or geo-fenced locations that have been collected from the wireless device 204 and, perhaps, other networked wireless devices. If the users choose to share their information, the remote database 250 of a server may contain routes from various devices. That is, the remote database 250 may be, at least in part, crowd-sourced. Information is often called crowd-sourced when it is gathered from a large group or "crowd" of users.

### GEO-FENCING OPERATION BASED UPON SEMANTIC LOCATIONS

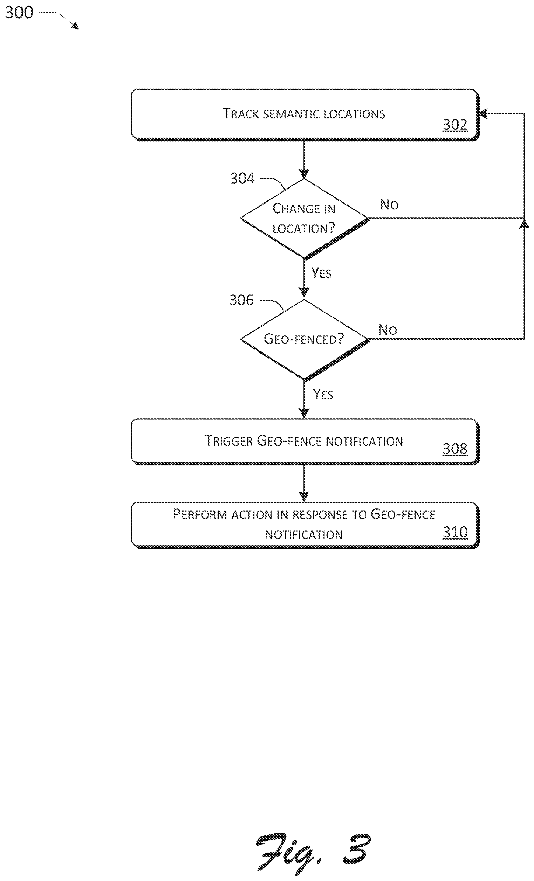

Fig. 3 illustrates an example process 300 for implementing, at least in part, the technology described herein. In particular, process 300 depicts a geo-fencing operation of a mobile device, like mobile devices already introduced herein (such as device 110a/110b and 204.

At 302, a mobile device continuously tracks present semantic location. It keeps a history of tracked locations so that a comparison with a previous location can be performed. The mobile device encountering one or more ambient IWS sources during periodic scans for such sources. Upon such an encounter, the mobile device detects the one or more ambient IWS sources and identifies the unique identification of the detected ambient IWS sources.

The mobile device then recognizes a particular semantic location based at least in part upon the identified one or more ambient IWS sources being associated with the present semantic location in a database of such associations. Such a database may be created previously by the user of this device or may be created by crowd-sourced information from many users.

Indeed, the mobile device can track route as a reoccurring pattern of differing semantic locations. As used herein, a route has a start and end semantic location as well as a set of semantic locations that have been previously encountered along the route.

At 304, the mobile device determines if the tracked present semantic location represents a change in location. That is the present semantic location differs from the previously tracked semantic location. If not, the process 300 returns to beginning at 302 to continue tracking semantic locations. If the location has changed, then the process 300 proceeds to operation 306.

At 306, the mobile device determines if a geo-fence boundary has been crossed. This is accomplished by determined by comparing whether either the present or the previous semantic locations are geo-fenced. If neither are geo-fenced, then the process 300 returns to beginning at 302 to continue tracking semantic locations. If one is geo-fenced and the other is not, then the process 300 returns to beginning at 302 to continue tracking semantic locations.

If both locations are geo-fenced, then a determination is made to see if there are commonly geo-fenced. That is, the locations are commonly geo-fenced when both semantic locations are defined as part of the same geo-fence place or area. If they are commonly geo-fenced, then the process 300 returns to beginning at 302 to continue tracking semantic locations. If, however, the present and previous locations are not commonly geo-fenced, then the process 300 proceeds to operation 308.

At 308, the mobile device triggers a geo-fence notification.

At 310, the mobile device performs particular actions based upon the geo-fence notification and information about which geo-fence place and/or locations involved.

Note that, for this process 300, the location can be a place or some point along a route. A user may set a geo-fence for "10 minutes before arrival to Home." In that instance, the geo-fence is set for a point along the route that is known to be 10 minutes before arrival.

### EXAMPLE COMPUTING DEVICE

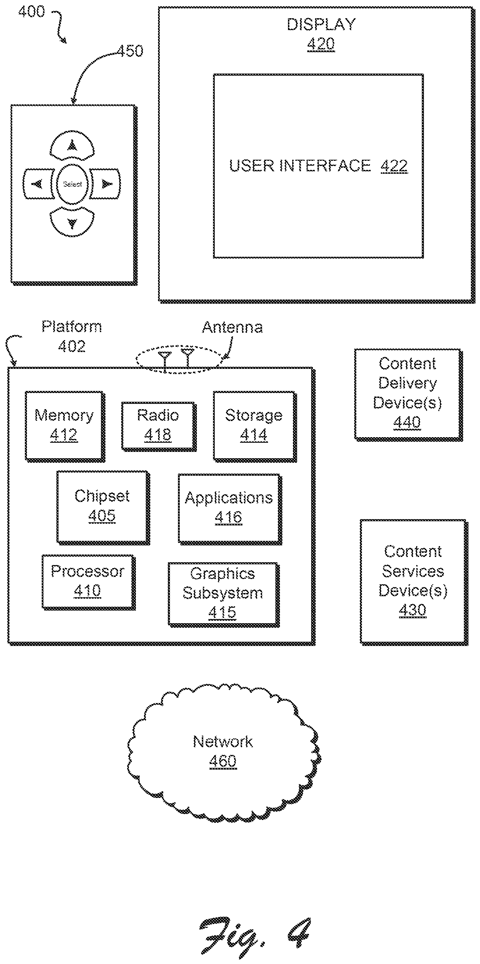

Fig. 4 illustrates an example system 400 that may implement, at least in part, the technologies described herein. In various implementations, system 400 is a media system, although system 400 is not limited to this context. For example, system 400 can be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet, or smart television), mobile internet device (MID), messaging device, data communication device, and so forth.

In various implementations, system 400 includes a platform 402 coupled to a display 420. Platform 402 receives content from devices such as content services device 430, content delivery device 440, or other similar content sources. A navigation controller 450 including one or more navigation features may be used to interact with, for example, platform 402 and/or display 420.

In various implementations, platform 402 includes any combination of a chipset 405, a processor 410, memory 412, storage 414, a graphics subsystem 415, applications 416 and/or radio 418. Chipset 405 provides intercommunication among processor 410, memory 412, storage 414, graphics subsystem 415, application 416, and/or radio 418. For example, chipset 405 can include a storage adapter (not depicted) capable of providing intercommunication with storage 414.

Processor 410 may be implemented as a complex instruction set computer (CISC) or reduced instruction set computer (RISC) processors, x86 instruction set compatible processors, multicore, or any other microprocessor or central processing unit (CPU). In various implementations, processor 410 may be dual-core processors, dual-core mobile processors, and so forth.

Memory 412 may be implemented as a volatile memory device such as, but not limited to, a random access memory (RAM), dynamic random access memory (DRAM), or static RAM (SRAM).

Storage 414 may be implemented as a nonvolatile storage device such as, but not limited to, a magnetic disk drive, optical disk drive, tape drive, an internal storage device, an attached storage device, flash memory, battery backed-up synchronous DRAM (SDRAM), and/or a network accessible storage device. In various implementations storage 414 includes technology to increase the storage performance-enhanced protection for valuable digital media when multiple hard drives are included.

Graphics subsystem 415 processes of images such as still or video for display. Graphics subsystem 415 can be a graphics processing unit (GPU) or a visual processing unit (VPU), for example. An analog or digital interface may be used to communicatively couple the graphics subsystem 415 and the display 420. For example, the interface can be a high-definition multimedia interface, display port, wireless high definition media interface (HDMI), and/or wireless HD-compliant techniques. Graphics subsystem 415 may be integrated into processor 410 or chipset 405. In some implementations graphics subsystem 415 may be a stand-alone card communicatively coupled to chipset 405.

The graphics and/or video processing techniques described herein are implemented in various hardware architectures. For example, graphics and/or video functionality may be integrated within a chipset. Alternatively, a discrete graphics and/or a video processor may be used. As still another implementation, the graphics and/or video functions may be provided by a general-purpose processor, including a multicore processor. In further embodiments, the functions may be implemented in a consumer electronics device.

Radio 418 may include one or more radios capable of transmitting and receiving signals using various suitable wireless communications techniques. Such techniques involve communications across one or more wireless networks. Example wireless networks include, but are not limited to, wireless local area networks (WLANs), wireless personal area networks (WPANs), wireless metropolitan area network (WMANs), cellular networks, and satellite networks. In communicating across such networks, radio 418 operates in accordance with one or more applicable standards in any version.

In various implementations, display 420 includes any television-type monitor or display. Display 420 may include, for example, a computer display screen, touch-screen display, video monitor, television-like device, and/or a television. Display 420 can be digital and/or analog. In various implementations, display 420 may be a holographic display. In addition, display 420 may be a transparent surface that receives a visual projection. Such projections convey various forms of information, images, and/or objects. For example, such projections may be a visual overlay for a mobile augmented reality (MAR) application. Under the control of one or more software applications (516), platform 402 can display user interface 422 on display 420.

In various implementations, content services device(s) (530) may be hosted by any national, international, and/or independent service and thus accessible to platform 402 via the Internet. Content services device(s) (530) may be coupled to platform 402 and/or to display 420. Platform 402 and/or content services device(s) 430 may be coupled to a network 460 to communicate media information to and from the network 460. Content delivery device(s) 440 also may be coupled to platform 402 and/or to display 420.

In various implementations, content services device(s) 430 include a cable television box, personal computer, network, telephone, Internet-enabled devices, appliances capable of delivering digital information and/or content, and any other similar device capable of unidirectionally or bidirectionally communicating content between content providers and platform 402 and/display 420, via network 460 or directly. The content can be communicated unidirectionally and/or bidirectionally to and from any one of the components in system 400 and a content provider via a network 460. Examples of content include any media information including, for example, video, music, medical and gaming information, and so forth.

Content services device(s) 430 receive content such as cable television programming including media information, digital information, and/or other content. Examples of content providers include any cable or satellite television or radio or Internet content providers. The provided examples are not meant to limit implementations in accordance with the present disclosure in any way.

In various implementations platform 402 may receive control signals from navigation controller 450 having one or more navigation features. The navigation features of controller 450 may be used to interact with user interface 422, for example. In some embodiments, navigation controller 450 may be a pointing device such as a computer hardware component, specifically a human interface device, that allows a user to input spatial (e.g., continuous and multidimensional) data into a computer. Many systems such as graphical user interfaces (GUI), and televisions and monitors allow the user to control and provide data to the computer or television using physical gestures.

Movements of the navigation features of controller 450 can be replicated on a display (e.g., display 420) by movements of a pointer, cursor, focus ring, or other visual indicators displayed on the display. For example, under the control of software applications 416, the navigation features located on navigation controller 450 can be mapped to virtual navigation features displayed on user interface 422. In some embodiments, controller 450 may not be a separate component but may be integrated into platform 402 and/or display 420. The present disclosure, however, is not limited to the elements or in the context shown or described herein.

In various implementations, drivers (not shown) include technology to enable users to instantly turn on and off platform 402 like a television with the touch of a button after initial boot up, when enabled. Program logic allows platform 402 to stream content to media adaptors or other content services device(s) 430 or content delivery device(s) 440 even when the platform is turned off. In addition, chipset 405 includes hardware and/or software support for 4.1 surround sound audio and/or high definition 5.1 surround sound audio, for example. Drivers may include a graphics driver for integrated graphics platforms. In some embodiments the graphics driver may comprise a peripheral component interconnect (PCI) express graphics card.

In various implementations any one or more of the components shown in system 400 can be integrated. For example, platform 402 and content services device(s) 430 can be integrated, or platform 402 and content delivery device(s) 440 can be integrated, or platform 402, content services device(s) 430, and content delivery device(s) 440 can be integrated. In various embodiments, platform 402 and display 420 can be an integrated unit. Display 420 and content service device(s) 430 can be integrated, or display 420 and content delivery device(s) 440 can be integrated. These examples are not meant to limit the present disclosure.

In various embodiments system 400 can be implemented as a wireless system, a wired system, or a combination of both. When implemented as a wireless system, system 400 can include components and interfaces suitable for communicating over a wireless shared media, such as one or more antennae, transmitters, receivers, transceivers, amplifiers, filters, control logic, and so forth. An example of wireless shared media includes portions of a wireless spectrum, such as the RF spectrum. When implemented as a wired system, system 400 can include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media can include a wire, cable, metal leads, printed circuit board (PCB), backplane, switch fabric, semiconductor material, twisted-pair wire, coaxial cable, fiber optics, and others.

Platform 402 can establish one or more logical or physical channels to communicate information. The information includes media information and control information. Media information refers to any data representing content meant for a user. Examples of content include data from a voice conversation, videoconference, streaming video, electronic mail ("e-mail") message, voice-mail message, alphanumeric symbols, graphics, image, video, text, and so on. Data from a voice conversation can be, for instance, speech information, silence periods, background noise, comfort noise, tones, and other similar items. Control information refers to any data representing commands, instructions, or control words meant for an automated system. For example, control information can be used to route media information through a system, or instruct a node to process the media information in a predetermined manner. The embodiments, however, are not limited to the elements or in the context shown or described in Fig. 4.

As described above, system 400 can be embodied in varying physical styles or form factors. Fig. 4 illustrates implementations of a small form-factor device 400 in which system 400 can be embodied. In embodiments, for example, device 400 can be implemented as a mobile computing device having wireless capabilities. A mobile computing device may refer to any device having a processing system and a mobile power source or supply, such as one or more batteries.

Examples of a mobile computing device, in addition to those already mentioned, also may include computers that are arranged to be worn by a person, such as a wrist computer, finger computer, ring computer, eyeglass computer, belt-clip computer, arm-band computer, shoe computers, clothing computers, and other wearable computers. In various embodiments, a mobile computing device can be implemented as a smart phone capable of executing computer applications, as well as voice communications and/or data communications. Although some embodiments can be described with a mobile computing device, other embodiments can be implemented using other wireless mobile computing devices as well. The embodiments are not limited in this context.

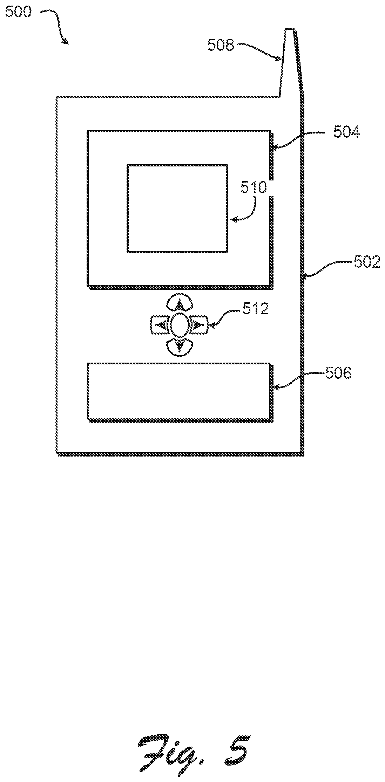

As shown in Fig. 5, device 500 includes a housing 502, a display 504, an I/O device 506, and an antenna 508. Device 500 also includes navigation features 512. Display 504 includes any suitable display unit for displaying information appropriate for a mobile computing device. I/O device 506 includes any suitable I/O device for entering information into a mobile computing device. Examples for I/O device 506 include an alphanumeric keyboard, a numeric keypad, a touch pad, input keys, buttons, switches, rocker switches, microphones, speakers, voice recognition device and software, and others. Information also can be entered into device 500 by way of microphone (not shown). Such information is digitized by a voice recognition device (not shown). The embodiments are not limited in this context.

Various embodiments can be implemented using hardware elements, software elements, or a combination of both. Examples of hardware elements include processors, microprocessors, circuits, circuit elements (e.g., transistors, resistors, capacitors, inductors, etc.), integrated circuits, application specific integrated circuits (ASIC), programmable logic devices (PLD), digital signal processors (DSP), field programmable gate array (FPGA), logic gates, registers, semiconductor device, chips, microchips, chip sets, and more. Examples of software include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof Determining whether an embodiment is implemented using hardware elements and/or software elements varies in accordance with any number of factors, such as desired computational rate, power levels, heat tolerances, processing cycle budget, input data rates, output data rates, memory resources, data bus speeds, and other design or performance constraints.

One or more aspects of at least one embodiment can be implemented by representative instructions stored on a machine-readable medium that represents various logic within the processor, which when read by a machine causes the machine to fabricate logic to perform the techniques described herein. Such representations, known as "IP cores" can be stored on a tangible, machine-readable medium and supplied to various customers or manufacturing facilities to load into the fabrication machines that actually make the logic or processor.

While certain features set forth herein have been described with reference to various implementations, this description is not intended to be construed in a limiting sense. Hence, various modifications of the implementations described herein, as well as other implementations, which arc apparent to persons skilled in the art to which the present disclosure pertains arc deemed to lie within the scope of the present disclosure.

Realizations in accordance with the present invention have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations, and data stores arc somewhat arbitrary, and particular operations are demonstrated in the context of specific illustrative configurations. Other allocations of functionality arc envisioned and may fall within the scope of claims that follow. Finally, structures and functionality presented as discrete components in the various configurations may be implemented as a combined structure or component. These and other variations, modifications, additions, and improvements may fall within the scope of the invention as defined in the claims that follow.

### ADDITIONAL AND ALTERNATIVE IMPLEMENTATION NOTES

In general, a mobile device is a small, hand-held, portable computing device that typically has a display screen and some user input mechanism (e.g., touch screen or keyboard). Often they weigh less than two pounds. Often, they are equipped with wireless communications capabilities, such as Wi-Fi, Bluetooth, and cellular. Examples of implementations of a mobile device include a smartphone, a tablet computer, a feature phone, a personal digital assistant (PDA), any wireless-enabled wearable devices, laptop computers, netbook computers, or other so-called handheld devices or computers.

In the above description of exemplary implementations, for purposes of explanation, specific numbers, materials configurations, and other details are set forth in order to better explain the present invention, as claimed. However, it will be apparent to one skilled in the art that the claimed invention may be practiced using different details than the exemplary ones described herein. In other instances, well-known features are omitted or simplified to clarify the description of the exemplary implementations.

The inventor intends the described exemplary implementations to be primarily examples. The inventor does not intend these exemplary implementations to limit the scope of the appended claims. Rather, the inventor has contemplated that the claimed invention might also be embodied and implemented in other ways, in conjunction with other present or future technologies.

Moreover, the word "exemplary" is used herein to mean serving as an example, instance, or illustration. Any aspect or design described herein as exemplary is not necessarily to be construed as preferred or advantageous over other aspects or designs. Rather, use of the word "exemplary" is intended to present concepts and techniques in a concrete fashion. The term "technology," for instance, may refer to one or more devices, apparatuses, systems, methods, articles of manufacture, and/or computer-readable instructions as indicated by the context described herein.

As used in this application, the term "or" is intended to mean an inclusive "or" rather than an exclusive "or." That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more," unless specified otherwise or clear from context to be directed to a singular form,

Note that the order in which the processes arc described is not intended to be construed as a limitation, and any number of the described process blocks can be combined in any order to implement the processes or an alternate process. Additionally, individual blocks may be deleted from the processes without departing from the scope of the subject matter described herein.

One or more embodiments described herein may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "computer-readable media" includes computer-storage media. For example, computer-storage media may include, but are not limited to, magnetic storage devices (e.g., hard disk, floppy disk, and magnetic strips), optical disks (e.g., compact disk [CD] and digital versatile disk [DVD]), smart cards, flash memory devices (e.g., thumb drive, stick, key drive, and SD cards), and volatile and nonvolatile memory (e.g., RAM and ROM).

## Claims

1. A mobile device comprising:
a location-awareness system (220) configured to track semantic locations of the mobile device, wherein each tracked semantic location is labeled and is a discrete location **characterized by** one or more identifying observable or ascertainable innate attributes other than geo-physical coordinates and wherein the tracking of semantic locations of the mobile device is based on an ambient radio environment observed by the mobile device;
a place manager (222) configured to determine whether a present semantic location has changed so that it differs from a previous semantic location, wherein such determination is based upon the tracked semantic locations;
a geo-fence manager (224) configured to:
determine whether the present semantic location and the previous semantic location are commonly geo-fenced, wherein such determination is in response to the change;
trigger a geo-fence notification in response to a determination that the present semantic location and the previous semantic location are not commonly geo-fenced; and
an action manager (216) that is configured to, in response to the geo-fence notification:
send a message to one or more predetermined recipients;
wherein the mobile device is configured to share route and geo-fenced place definitions with the one or more predetermined recipients based on a private exchange using encryption and authentication protocols.

2. A mobile device as recited by claim 1, wherein the location-awareness system is further configured to:
encounter one or more ambient identifiable wireless signal, IWS, sources, wherein upon such an encountering, the location-awareness system is further configured to:
detecting the one or more ambient IWS sources; and
identifying unique identification of the detected ambient IWS sources;
recognize a particular semantic location based at least in part upon the identified one or more ambient IWS sources being associated with the present semantic location in a database of such associations.

3. A mobile device as recited by claim 1, wherein the geo-fence manager is further configured to trigger the notification before the mobile device reaches a predicted destination location of route that the mobile device is traveling along.

4. A mobile device as recited by claim 1, further comprising a route manager configured to recognize a present route being traveled by the mobile device and predict destination location based upon the recognized route, wherein the geo-fence manager is further configured to trigger the geo-fence notification before the mobile device reaches the predicted destination location of the recognized present route.

5. A mobile device as recited by claim 1, wherein the route manager is further configured to recognize of the present route by, at least in part, a comparison of a portion of a series of encountered ambient IWS sources with one or more known routes.

6. A mobile device as recited by claim 1, wherein the present or previous location is mobile.

7. One or more computer-readable media with processor-executable instructions stored thereon which when executed by one or more processors cause performance of operations comprising:
tracking semantic locations of a mobile device (302), wherein each tracked semantic location is a discrete location **characterized by** one or more identifying observable or ascertainable innate attributes other than absolute or geo-physical coordinates and wherein the tracking of semantic locations of the mobile device is based on an ambient radio environment observed by the mobile device ;
based upon the tracked semantics locations, determining whether a present semantic location has changed so that it differs from a previous semantic location;
in response to the change, determining whether the present semantic location or the previous semantic location are commonly geo-fenced;
triggering a geo-fence notification in response to determination that the present semantic location and the previous semantic location are not commonly geo-fenced;
sending, in response to the geo-fence notification, a message to one or more predetermined recipients;
wherein the mobile device is configured to share route, and geo-fenced place definitions with the one or more predetermined recipients based on a private exchange using encryption and authentication protocols.

8. One or more computer-readable media as recited by claim 7, wherein the tracking of the semantic locations includes:
encountering one or more ambient identifiable wireless signal, IWS, sources, wherein the encountering includes:
detecting the one or more ambient IWS sources; and
identifying unique identification of the detected ambient IWS sources;
recognizing a particular semantic location based at least in part upon the identified one or more ambient IWS sources being associated with the present semantic location in a database of such associations.

9. One or more computer-readable media as recited by claim 8, the operations further comprise:
recognizing present route being traveled by the mobile device;
predicting destination location based upon the recognized route,
wherein the triggering of the geo-fence notification occurs before the mobile device reaches the predicted destination location of recognized present route.

## Patentansprüche

1. Mobile Vorrichtung umfassend:
ein Standort-Bewusstsein-System (220), das dazu ausgelegt ist, semantische Positionen der mobilen Vorrichtung zu verfolgen, wobei jede verfolgte semantische Position bezeichnet ist und eine diskrete Position ist, die durch ein oder mehrere identifizierende beobachtbare oder feststellbare eigene Attribute gekennzeichnet ist, die keine geophysikalischen Koordinaten sind, und wobei das Verfolgen von semantischen Positionen der mobilen Vorrichtung auf einer ambienten Funkumgebung basiert, die von der mobilen Vorrichtung beobachtet wird;
einen Ortsmanager (222), der dazu ausgelegt ist, zu bestimmen, ob sich eine gegenwärtige semantische Position so verändert hat, dass sie sich von einer früheren semantischen Position unterscheidet, wobei eine solche Bestimmung auf den verfolgten semantischen Positionen basiert;
einen Geofence-Manager (224), der dazu ausgelegt ist:
zu bestimmen, ob die gegenwärtige semantische Position und die vorherige semantische Position gewöhnlich "geo-fenced" sind, wobei eine solche Bestimmung als Reaktion auf die Veränderung erfolgt;
Auslösen einer Geofence-Benachrichtigung als Reaktion auf eine Bestimmung, dass die gegenwärtige semantische Position und die vorherige semantische Position gewöhnlich nicht "geo-fenced" sind; und
einen Handlungsmanager (216), der dazu ausgelegt ist, als Reaktion auf die Geofence-Benachrichtigung eine Nachricht an einen oder mehrere vorbestimmte Empfänger zu senden;
wobei die mobile Vorrichtung dazu ausgelegt ist, basierend auf einem privaten Austausch unter Verwendung von Verschlüsselungs- und Authentifizierungsprotokollen, Routen- und Geofence-Ortsdefinitionen mit dem einen oder mehreren vorbestimmten Empfängern gemeinsam zu nutzen.

2. Mobile Vorrichtung nach Anspruch 1, wobei das Standort-Bewusstseins-System ferner dazu ausgelegt ist:
eine oder mehrere ambiente identifizierbare drahtlose Signal-, IWS-, Quellen anzutreffen, wobei bei einem solchen Antreffen das Positions-Bewusstseins-System ferner ausgelegt ist zum:
Detektieren der einen oder mehreren ambienten IWS-Quellen; und
Identifizieren einer eindeutigen Identifikation der detektierten ambienten IWS-Quellen;
eine besondere semantische Position zumindest teilweise basierend auf der identifizierten einen oder mehreren ambienten IWS-Quellen zu erkennen, die der gegenwärtigen semantischen Position in einer Datenbank solcher Zuordnungen zugeordnet sind.

3. Mobile Vorrichtung nach Anspruch 1, wobei der Geofence-Manager ferner dazu ausgelegt ist, die Benachrichtigung auszulösen, bevor die mobile Vorrichtung eine vorhergesagte Zielposition der Route erreicht, auf der sich die mobile Vorrichtung bewegt.

4. Mobile Vorrichtung nach Anspruch 1, die ferner einen Routenmanager umfasst, der dazu ausgelegt ist, eine gegenwärtige Route, auf der sich die mobile Vorrichtung bewegt, zu erkennen und die Zielposition basierend auf der erkannten Route vorherzusagen, wobei der Geofence-Manager ferner dazu ausgelegt ist, die Geofence-Benachrichtigung auszulösen, bevor die mobile Vorrichtung die vorhergesagte Zielposition der erkannten gegenwärtigen Route erreicht.

5. Mobile Vorrichtung nach Anspruch 1, wobei der Routenmanager ferner dazu ausgelegt ist, die gegenwärtige Route zumindest teilweise durch einen Vergleich eines Teils einer Reihe von angetroffenen ambienten IWS-Quellen mit einer oder mehreren bekannten Routen zu erkennen.

6. Mobile Vorrichtung nach Anspruch 1, wobei die gegenwärtige oder vorherige Position mobil ist.

7. Ein oder mehrere computerlesbare Medien mit darauf gespeicherten, von einem Prozessor ausführbaren Anweisungen, die, wenn sie von einem oder mehreren Prozessoren ausgeführt werden, die Durchführung von Operationen veranlassen, die Folgendes umfassen:
Verfolgen semantischer Positionen einer mobilen Vorrichtung (302), wobei jede verfolgte semantische Position eine diskrete Position ist, die durch ein oder mehrere identifizierende beobachtbare oder feststellbare eigene Attribute gekennzeichnet ist, die keine absoluten oder geophysikalischen Koordinaten sind, und wobei das Verfolgen semantischer Positionen der mobilen Vorrichtung auf einer ambienten Funkumgebung basiert, die von der mobilen Vorrichtung beobachtet wird;
basierend auf den verfolgten semantischen Positionen, Bestimmen, ob sich eine gegenwärtige semantische Position verändert hat, so dass sie sich von einer früheren semantischen Position unterscheidet;
als Reaktion auf die Veränderung, Bestimmen, ob die gegenwärtige semantische Position oder die vorherige semantische Position gewöhnlich geo-fenced sind;
Auslösen einer Geofence-Benachrichtigung als Reaktion auf eine Bestimmung, dass die gegenwärtige semantische Position und die vorherige semantische Position gewöhnlich nicht "geo-fenced" sind;
Senden, als Reaktion auf die Geofence-Benachrichtigung, einer Nachricht an einen oder mehrere vorbestimmte Empfänger;
wobei die mobile Vorrichtung dazu ausgelegt ist, basierend auf einem privaten Austausch unter Verwendung von Verschlüsselungs- und Authentifizierungsprotokollen, Routen- und Geofence-Ortsdefinitionen mit dem einen oder mehreren vorbestimmten Empfängern gemeinsam zu nutzen.

8. Ein oder mehrere computerlesbare Medien nach Anspruch 7, wobei das Verfolgen der semantischen Positionen beinhaltet:
Antreffen einer oder mehrerer ambienter identifizierbarer drahtloser Signal-, IWS-, Quellen, IWS, wobei das Antreffen beinhaltet:
Detektieren der einen oder mehreren ambienten IWS-Quellen; und
Identifizieren einer eindeutigen Identifikation der detektierten ambienten IWS-Quellen;
Erkennen einer besonderen semantischen Position zumindest teilweise basierend auf der identifizierten einen oder mehreren ambienten IWS-Quellen, die der gegenwärtigen semantischen Position in einer Datenbank solcher Zuordnungen zugeordnet sind.

9. Ein oder mehrere computerlesbare Medien nach Anspruch 8, wobei die Operationen ferner umfassen:
Erkennen der gegenwärtigen Route, auf der sich die mobile Vorrichtung bewegt;
Vorhersage der Zielposition basierend auf der erkannten Route,
wobei das Auslösen der Geofence-Benachrichtigung erfolgt, bevor die mobile Vorrichtung die vorhergesagte Zielposition der erkannten gegenwärtigen Route erreicht.

## Revendications

1. Appareil mobile comprenant :
un système de prise de conscience d'emplacement (220) configuré de façon à suivre des emplacements sémantiques de l'appareil mobile, chaque emplacement sémantique suivi étant marqué et étant un emplacement discret **caractérisé par** un ou plusieurs attributs d'identification innés observables ou déterminables autres que des coordonnées géophysiques et le suivi d'emplacements sémantiques de l'appareil mobile étant basé sur un environnement radio ambiant observé par l'appareil mobile ;
un gestionnaire de lieu (222) configuré de façon à déterminer si un emplacement sémantique présent a changé ou pas de sorte qu'il diffère d'un emplacement sémantique antérieur, cette détermination étant basée sur les emplacements sémantiques suivis ;
un gestionnaire de géo-barrière (224) configuré de façon à :
déterminer si l'emplacement sémantique présent et l'emplacement sémantique antérieur comportent ou pas une géo-barrière commune, cette détermination étant en réponse au changement ;
déclencher une notification de géo-barrière en réponse à une détermination que l'emplacement sémantique présent et l'emplacement sémantique antérieur ne comportent pas de géo-barrière commune ; et
un gestionnaire d'actions (216) qui est configuré de façon à, en réponse à la notification de géo-barrière :
envoyer un message à un ou plusieurs destinataires prédéterminés ;
l'appareil mobile étant configuré de façon à partager des définitions d'itinéraire et de lieu avec géo-barrière avec le ou les destinataires prédéterminés en se basant sur un échange privé utilisant des protocoles de chiffrement et d'authentification.

2. Appareil mobile selon la revendication 1, dans lequel le système de prise de conscience d'emplacement est configuré en outre de façon à :
rencontrer une ou plusieurs sources ambiantes de signaux sans fil identifiables, IWS, et, lors de cette rencontre, le système de prise de conscience d'emplacement étant configuré en outre de façon à :
détecter la ou les sources IWS ambiantes ; et à
identifier une identification unique des sources IWS ambiantes détectées ;
reconnaître un emplacement sémantique particulier en se basant au moins en partie sur la ou les sources IWS ambiantes identifiées étant associées à l'emplacement sémantique présent dans une base de données de ces associations.

3. Appareil mobile selon la revendication 1, dans lequel le gestionnaire de géo-barrière est configuré en outre de façon à déclencher la notification avant que l'appareil mobile n'atteigne un emplacement de destination prédit d'itinéraire le long duquel l'appareil mobile se déplace.

4. Appareil mobile selon la revendication 1, comprenant en outre un gestionnaire d'itinéraire configuré de façon à reconnaître un itinéraire présent suivi par l'appareil mobile et à prédire un emplacement de destination en se basant sur l'itinéraire reconnu, le gestionnaire de géo-barrière étant configuré en outre de façon à déclencher la notification de géo-barrière avant que l'appareil mobile n'atteigne l'emplacement de destination prédit de l'itinéraire présent reconnu.

5. Appareil mobile selon la revendication 1, dans lequel le gestionnaire d'itinéraire est configuré en outre de façon à reconnaître l'itinéraire présent en comparant, au moins en partie, une partie d'une série de sources IWS ambiantes rencontrées avec un ou plusieurs itinéraires connus.

6. Appareil mobile selon la revendication 1, dans lequel l'emplacement présent ou antérieur est mobile.

7. Un ou plusieurs supports lisibles par ordinateur avec des instructions exécutables par processeur stockées sur eux qui, lorsqu'elles sont exécutées par un ou plusieurs processeurs, entraînent l'exécution d'opérations comprenant :
le suivi d'emplacements sémantiques d'un appareil mobile (302), chaque emplacement sémantique suivi étant un emplacement discret **caractérisé par** un ou plusieurs attributs d'identification innés observables ou déterminables autres que des coordonnées absolues ou géophysiques et le suivi d'emplacements sémantiques de l'appareil mobile étant basé sur un environnement radio ambiant observé par l'appareil mobile ;
en se basant sur les emplacements sémantiques suivis, la détermination de si un emplacement sémantique présent a changé ou pas de sorte qu'il diffère d'un emplacement sémantique antérieur ;
en réponse à ce changement, la détermination de si l'emplacement sémantique présent ou l'emplacement sémantique antérieur comportent ou pas une géo-barrière commune ;
le déclenchement d'une notification de géo-barrière en réponse à une détermination que l'emplacement sémantique présent et l'emplacement sémantique antérieur ne comportent pas de géo-barrière commune ;
l'envoi, en réponse à la notification de géo-barrière, d'un message à un ou plusieurs destinataires prédéterminés ;
l'appareil mobile étant configuré de façon à partager des définitions d'itinéraire et de lieu avec géo-barrière avec le ou les destinataires prédéterminés en se basant sur un échange privé utilisant des protocoles de chiffrement et d'authentification.

8. Un ou plusieurs supports lisibles par ordinateur selon la revendication 7, dans lesquels le suivi des emplacements sémantiques comprend :
la rencontre d'une ou de plusieurs sources ambiantes de signaux sans fil identifiable, IWS, cette rencontre comprenant :
la détection de la ou des sources IWS ambiantes ; et
l'identification d'une identification unique des sources IWS ambiantes détectées ;
la reconnaissance d'un emplacement sémantique particulier en se basant au moins en partie sur la ou les sources IWS ambiantes identifiées étant associées à l'emplacement sémantique présent dans une base de données de ces associations.

9. Un ou plusieurs supports lisibles par ordinateur selon la revendication 8, les opérations comprenant en outre :
la reconnaissance de l'itinéraire présent étant suivi par l'appareil mobile ;
la prédiction d'un emplacement de destination en se basant sur l'itinéraire reconnu,
le déclenchement de la notification de géo-barrière se produisant avant que l'appareil mobile n'atteigne l'emplacement de destination prédit de l'itinéraire présent reconnu.
